# EUROPÄISCHE PATENTSCHRIFT

(11) **EP 2 562 072 B1**
(45) Veröffentlichungstag und Bekanntmachung des Hinweises auf die Patenterteilung: **04.03.2015**
(21) Anmeldenummer: 11006956.4
(22) Anmeldetag: 25.08.2011
(51) Int. Cl.: B62M 6/65, B62M 7/12, B62M 23/02, B62M 11/16

(54) **Elektrischer Radnabenantrieb für ein Fahrzeug, insbesondere ein Fahrrad**
Electric wheel hub drive for a vehicle, in particular for a bicycle
Entraînement de roue électrique pour un véhicule, notamment un vélo

(43) Veröffentlichungstag der Anmeldung: 27.02.2013
(73) Patentinhaber: Maxon Motor AG, 6072 Sachseln (CH)
(72) Erfinder: Ramon, David, 6987 Caslano (CH); Trachsel, Mathis, 6006 Luzern (CH); Fölmli, Franz-Xaver, 6370 Oberdorf (CH); Fritschy, Hugo, 6072 Sachseln (CH); Pittini, Raniero, 6052 Hergiswil (CH)
(74) Vertreter: Grünecker, Kinkeldey, Stockmair & Schwanhäusser

(56) Entgegenhaltungen:
- CN-A- 101 311 021
- CN-Y- 2 727 041
- JP-A- 2005 278 234
- JP-A- 2009 090 982
- US-A- 5 581 136
- US-A- 6 131 683

## Beschreibung

Die vorliegende Erfindung betrifft einen elektrischen Radnabenantrieb für ein Fahrzeug, insbesondere Fahrrad, nach dem Oberbegriff des unabhängigen Anspruchs 1. Der Radnabenantrieb umfasst ein Nabengehäuse, welches drehbar um eine Achse gelagert ist. Ferner umfasst der Radnabenantrieb einen koaxial zur Achse angeordneten bürstenlosen Elektromotor mit einem Rotor und mit einem Stator, wobei der Elektromotor zum Antrieb des Nabengehäuses vorgesehen ist. Der Stator umfasst eine hohlzylindrisch ausgebildete Statorwicklung, der Rotor ist radial innerhalb der Statorwicklung als Innenläufer angeordnet. Bei derartigen bürstenlosen Elektromotoren wird ein Wechselmagnetfeld durch Spulen des Stators erzeugt. Der Rotor hingegen umfasst keine Wicklung, sondern einen bzw. mehrere Permanentmagnete, die mit dem Wechselmagnetfeld des Stators derart wechselwirken, dass der Rotor in Drehung versetzt wird.

Elektrische Radnabenantriebe sind aus dem Stand der Technik bekannt und werden beispielsweise als Hilfsantrieb bei Fahrrädern eingesetzt. An derartige Radnabenantriebe werden die vielfältigsten Anforderungen gestellt. Üblicherweise sind Nabengehäuse und Elektromotor koaxial zueinander angeordnet, wobei der Motor und ein gegebenenfalls zwischengeschaltetes Getriebe vom Nabengehäuse umschlossen sind. Für Motor und Getriebe steht daher zunächst sehr wenig Platz zur Verfügung. Dies bedeutet, dass der Radnabenantrieb eine relativ hohe Leistung bei geringem Bauvolumen erbringen muss. Auch werden von derartigen Radnabenantrieben von Kundenseite immer noch größere Drehmomente erwartet. Direktantriebe mit groβem Drehmoment lassen sich nur realisieren, wenn der Elektromotor in radialer Richtung relativ groß baut. Um ein großes Drehmoment bei radial klein bauenden Elektromotoren bzw. Radnabenantrieben erzielen zu können, werden Planetengetriebe eingesetzt, die zwischen Elektromotor und Nabengehäuse geschaltet sind. Bei sehr leistungsfähigen Antrieben wird in der Regel relativ viel Abwärme erzeugt. Diese Abwärme muss nach außen abgeführt werden, um zu verhindern, dass der Motor bzw. das Innenleben des Radnabenantriebs, insbesondere das Getriebe, Schaden nimmt.

Ein elektrischer Radnabenantrieb ist beispielsweise aus EP 1 601 083 A1, EP 1 601 085 A1 und EP 1 640 261 A1 bekannt. Alle drei Druckschriften offenbaren einen Radnabenantrieb, bei dem Elektromotor und Getriebe vom Nabengehäuse umschlossen sind. Der Rotor des Elektromotors ist als Innenläufer ausgeführt und umfasst an seinem Außenumfang einen Ring von aneinander gereihten Permanentmagneten, die abwechselnd gegensätzlich gepolt sind. Im Stator des Elektromotors wird das Wechselmagnetfeld erzeugt. Der Stator umfasst dazu hohlzylindrisch ausgeführte Blechpakete, die den Rotor umgeben. Auf mehrere in Umfangsrichtung verteilte Pole der Blechpakete sind Wicklungen des Stators aufgewickelt, die abwechselnd mit Strom beaufschlagt werden. In EP 1 601 083 A1 ist das Problem der Wärmeabfuhr angesprochen. Es ist dort als bekannt beschrieben, zwischen einem Gehäuse des Elektromotors und dem Nabengehäuse eine Kühlflüssigkeit vorzusehen, durch die der Wärmeabtransport vom Stator des Elektromotors begünstigt wird. Die EP 1 601 083 A1 gibt jedoch an, dass diese Art der Kühlung einen erhöhten Aufwand bedeutet, da die Kühlflüssigkeit zum einen in das Nabengehäuse eingebracht und zum anderen dort sicher eingekapselt werden müsse. Die EP 1 601 083 A1 schlägt daher vor, den Stator des Elektromotors seitlich zu halten, so dass kein Motorgehäuse notwendig ist. Dadurch könne die im Stator entstehende Abwärme besser nach außen abgeführt werden. Die EP 1 640 261 A1 hingegen schlägt vor, eine Luftpumpe im Nabengehäuse vorzugehen, mittels derer Umgebungsluft durch das Nabengehäuse zur Kühlung des Elektromotors geführt wird.

Weitere Radnabenantriebe sind aus EP 1 736 347 A1 und WO 2007/083995 A1 bekannt. Auch bei den in diesen beiden Druckschriften beschriebenen Radnabenantrieben sind Elektromotor und Getriebe vom Nabengehäuse umschlossen. Jedoch ist der Rotor des Elektromotors als Außenläufer ausgeführt Das bedeutet, der Stator befindet sich innerhalb eines hohlzylindrisch ausgeführten Rotors. Bei dieser Ausführung mit Außenläufer kann die im Stator entstehende Abwärme noch schlechter nach außen abgeführt werden. Ein derartiger Antrieb kann daher in der Regel nicht so leistungsstark ausgelegt werden, wie die zuvor beschriebenen Radnabenantriebe mit Innenläufer.

Ein in die Felge eines Fahrzeugs integrierter Radnabenantrieb ist zudem aus US 2008/0070736 A1 bekannt. Der Antrieb umfasst einen Wechselstrommotor mit außenliegendem Stator und Innenläufer. Der Durchmesser des Stators entspricht dabei dem Durchmesser der Felge. Durch den relativ großen Außenumfang des Stators steht dadurch eine sehr groβe Fläche für die Wärmeabfuhr zur Verfügung. Der Antrieb baut allerdings dadurch in radialer Richtung sehr groß und ist deshalb beispielsweise nicht als Hilfsantrieb für ein Fahrrad geeignet.

Ein elektrischer Radnabenantrieb der eingangs genannten Art ist aus US 5,581,136 A bekannt.

Es ist Aufgabe der vorliegenden Erfindung, einen gegenüber dem Stand der Technik verbesserten Radnabenantrieb anzugeben, der bei kleinen Abmessungen eine große Leistung sowie ein hohes Drehmoment zur Verfügung stellt, wobei gleichzeitig eine ausreichende Wärmeabfuhr gewährleistet sein soll. Es ist ferner Aufgabe der vorliegenden Erfindung, die Effizienz des Radnabenantriebs zu verbessern. Der Radnabenantrieb soll zudem möglichst leicht sein.

Die Aufgabe wird gelöst durch die Merkmale des unabhängigen Anspruchs 1. Demnach liegt dann eine erfindungsgemäße Lösung der Aufgabe vor, wenn die Statorwicklung als eisenlose Statorwicklung und mehrpolig ausgeführt ist und in Umfangsrichtung mehrere sich gegenseitig überlagernde Wicklungen umfasst, die abwechselnd reihum mit Strom beaufschlagt werden. Dadurch kann ein Radnabenantrieb mit hoher Leistung und hohem Drehmoment bei vergleichsweise geringer Abwärmeerzeugung bereitgestellt werden. Die erfindungsgemäße eisenlose Statorwicklung bietet dabei mehrere Vorteile. Zum einen entstehen keine Eisenverluste, also keine Hysterese- und Wirbelstromverluste sowie Nachwirkungsverluste, wodurch eine geringere Abwärme auftritt und die Effizienz gesteigert werden kann. Ein Elektromotor mit eisenloser Wicklung ist zudem überlastfähig und weist insbesondere bei Überlast einen guten Wirkungsgrad auf. Daher kann beispielsweise beim Anfahren oder an Steigungen ein besonders großes Drehmoment zur Verfügung gestellt werden. Zur Steigerung der Überlastfähigkeit ist eine gute Wärmeabfuhr erforderlich. Diese ist bei dem erfindungsgemäßen Radnabenantrieb gewährleistet. Zum anderen ist auch das Gewicht des Radnabenantriebs geringer, was insbesondere bei Fahrrädern, die mit einem erfindungsgemäßen Radnabenantrieb ausgestattet sind, von Vorteil ist. Schließlich ist der erfindungsgemäße Radnabenantrieb auch noch leiser als ein vergleichbarer Radnabenantrieb mit Blechpaketen. Vorzugsweise ist der Rotor des Elektromotors mehrpolig ausgeführt. Das heißt, es sind mehrere Permanentmagnete vorgesehen, die in Umfangsrichtung verteilt angeordnet und abwechselnd gegenseitig gepolt sind. Zur Beaufschlagung der Wicklungen der Statorwicklung mit Strom ist in der Regel eine Elektronik vorgesehen. Der Stator ist drehfest mit der Achse verbunden.

Durch den außenliegenden Stator kann die in der Statorwicklung entstehende Abwärme sehr gut nach außen abgeführt werden. Es sind daher hohe Leislungsaufnahmen möglich, ohne dass der Elektromotor, dabei Schaden nimmt. Vorzugsweise sind die einzelnen, sich in Umfangsrichtung überlagernden, Wicklungen der Statorwicklung mit Epoxyd miteinander verleimt. Die Statorwicklung weist dadurch einen guten Zusammenhalt auf und wird auch bei größerer Erschütterung nicht verformt.

Vorteilhafte Ausgestaltungen der vorliegenden Erfindung sind Gegenstand der Unteransprüche.

In einer besonders bevorzugten Ausführungsform der vorliegenden Erfindung ist zwischen Elektromotor und Nabengehäuse ein Planetengetriebe geschaltet, das antriebsseitig mit dem Rotor und abtriebsseitig mit dem Nabengehäuse gekoppelt ist. So kann der Radnabenantrieb ein besonders hohes Drehmoment bereitstellen und trotzdem äußerst kompakt ausgeführt werden.

In einer weiteren bevorzugten Ausführungsform der vorliegenden Erfindung ist die Statorwicklung von einem Motorgehäuse des Elektromotors umschlossen und mit diesem wärmeleitend verbunden. Vorzugsweise besteht ein direkter Kontakt zwischen Statorwicklung und Motorgehäuse, wodurch eine möglichst schnelle Ableitung der Abwärme gewährleistet ist. Das Motorgehäuse ist daher vorzugsweise aus einem besonders gut wärmeleitenden Material gefertigt. Hierzu eignen sich in der Regel Metalle wie beispielsweise Stahl oder Aluminium. Weiter kann vorzugsweise vorgesehen sein, dass zwischen Statorwicklung und Motorgehäuse ein weichmagnetischer Rückschluss angeordnet ist. In diesem Fall liegt der Rückschluss vorzugsweise sowohl direkt am Motorgehäuse als auch an der Statorwicklung an, damit eine optimale Wärmeableitung gewährleistet wird. Der Rückschluss setzt sich vorzugsweise aus einer Vielzahl ringscheibenförmiger Bleche aus weichmagnetischem Stahl zusammen.

Bevorzugt besteht das Nabengehäuse aus einem amagnetischen oder paramagnetischen Material. Dadurch wird verhindert, dass im außenliegenden Gehäuse Eisenverluste entstehen. Dadurch kann zum einen die Effizienz des Radnabenantriebs gesteigert und zum anderen die entstehende Abwärme weiter reduziert werden. Es bietet sich an, das Nabengehäuse daher aus Aluminium zu fertigen.

In einer weiteren besonders bevorzugten Ausführungsform der vorliegenden Erfindung umschließt das Nabengehäuse den Elektromotor und das Planetengetriebe zumindest teilweise. Sowohl Elektromotor als auch Getriebe werden somit vom Nabengehäuse vor Verschmutzung und Beschädigung durch äußere Krafteinwirkung geschützt. Vorzugsweise umschließt das Nabengehäuse Elektromotor und Planetengetriebe vollständig. Getriebe und Motor sind dann optimal geschützt. Zudem ist diese Ausführungsform optisch ansprechend und gewährleistet, dass beispielsweise ein Hilfsantrieb eines Fahrrads von außen nicht ersichtlich ist. Es kann jedoch auch vorgesehen sein, dass das Nabengehäuse den Motor nur teilweise umschließt bzw. im Bereich des Motors Öffnungen aufweist, durch die kalte Außenluft zur Kühlung des Motors an den Stator bzw. das Motorgehäuse des Elektromotors gelangen kann.

Weiter vorzugsweise kann in einem Spalt zwischen Motorgehäuse und Nabengehäuse ein wärmeleitendes Fluid vorgesehen sein. Dadurch wird der Abtransport der im Stator des Elektromotors entstehenden Abwärme weiter verbessert. Vorzugsweise bestehen sowohl das Nabengehäuse als auch das Motorgehäuse zumindest im Bereich des Spaltes, in dem das wärmeleitende Fluid vorgesehen ist, aus einem Material mit hoher Wärmeleitfähigkeit. Hierzu eignen sich insbesondere Stahl oder Aluminium. Dadurch wird der Wärmeabtransport weiter begünstigt.

In einer weiteren besonders bevorzugten Ausführungsform der vorliegenden Erfindung ist das Planetengetriebe einstufig ausgeführt. Dadurch baut der erfindungsgemäße Radnabenantrieb auch in axialer Richtung sehr kurz und kann als Hilfsantrieb bei bestehenden Fahrrädern mit Standardgabelweiten nachgerüstet werden. Auch bei neuen Fahrrädern mit erfindungsgemäßem Radnabenantrieb können Standardkomponenten eingesetzt werden. Der erfindungsgemäße Radnabenantrieb mit einstufigem Planetengetriebe passt auf Mountainbike-Radachsen mit Standardlänge, wobei auf der gleichen Achse auch noch Bremsscheibe und Ritzel Platz finden. Das einstufige Planetengetriebe umfasst ein Sonnenrad, ein Hohlrad, zumindest ein mit dem Sonnenrad und dem Hohlrad kämmendes Planetenrad sowie einen Planetenträger zur Abstützung des zumindest einen Planetenrads. Vorzugsweise sind mehrere Planetenräder vorgesehen, die über den Umfang des Planetenträgers gleichmäßig verteilt sind.

In einer bevorzugten Ausführungsform ist das Sonnenrad des Planetengetriebes drehfest mit dem Rotor verbunden oder einstückig mit einer Rotorwelle des Rotors ausgeführt, wobei der Planetenträger den mit dem Nabengehäuse gekoppelten Abtrieb des Planetengetriebes bildet. Dadurch wird eine kompakte Bauweise erreicht, wobei ein großes Übersetzungsverhältnis möglich ist. Zudem kann der erfindungsgemäße Radnabenantrieb bei dieser Ausführungsform sehr leicht montiert werden.

In einer weiteren bevorzugten Ausführungsform der vorliegenden Erfindung ist das Hohlrad drehfest mit dem Stator verbunden. Dabei kann die Anzahl der Bauteile des erfindungsgemäßen Radnabenantriebs reduziert werden, wenn das Hohlrad durch das Motorgehäuse gebildet wird. Dadurch ist der erfindungsgemäße Radnabenantrieb äußerst kostengünstig herzustellen. Zudem vereinfacht sich dadurch die Montage, da zusätzliche Montageschritte zur Montage des Hohlrads entfallen.

In einer weiteren bevorzugten Ausführungsform der vorliegenden Erfindung ist das Planetenrad an seinen beiden gegenüberliegenden Stirnseiten radial im Planetenträger abgestützt. Dadurch werden im Planetengetriebe sehr geringe Reibungsverluste erzeugt. Das Planetengetriebe ist daher leichtgängiger, zudem kann dadurch der Wirkungsgrad des erfindungsgemäßen Radnabenantriebs gesteigert werden.

In einer weiteren besonders bevorzugten Ausführungsform der vorliegenden Erfindung ist das Planetenrad abgestuft und umfasst einen ersten Zahnkranz sowie einen zweiten Zahnkranz, wobei der Durchmesser des ersten Zahnkranzes größer ist als der Durchmesser des zweiten Zahnkranzes und wobei der erste Zahnkranz mit dem Sonnenrad und der zweite Zahnkranz mit dem Hohlrad kämmt. Dadurch sind auch mit dem einstufigen Planetengetriebe große Übersetzungsverhältnisse realisierbar. Ganz besonders bevorzugt befindet sich dabei der zweite Zahnkranz des Planetenrads in axialer Richtung näher am Rotor des Elektromotors als der erste Zahnkranz. Dadurch wird eine nochmals kompaktere Bauweise des erfindungsgemäßen Radnabenantriebs erreicht. Sowohl für das Motorgehäuse als auch für das Nabengehäuse wird weniger Material benötigt. Das Motorgehäuse baut in axialer Richtung dadurch äußerst kurz.

In einer weiteren besonders bevorzugten Ausführungsform der vorliegenden Erfindung ist der Abtrieb des Planetengetriebes über eine Freilaufkupplung mit dem Nabengehäuse gekoppelt. Sofern der Radnabenantrieb als Hilfsantrieb für ein Fahrrad zum Einsatz kommt, erlaubt die Freilaufkupplung eine Fahrt ohne Unterstützung durch den Hilfsantrieb, wobei in diesem Fall weder der Motor noch das Planetengetriebe Reibungsverluste generieren. Durch die Freilaufkupplung wird somit eine unangenehm bremsende Wirkung des Hilfsantriebs bei pedalgetriebener Fahrt vermieden.

In einer weiteren bevorzugten Ausführungsform der vorliegenden Erfindung ist das Nabengehäuse mehrteilig und mittels lösbarer Befestigungsmittel, insbesondere Schrauben, zusammengehalten. Das Nabengehäuse kann dadurch auf einfache Art und Weise für Unterhalt, Service und Kontrolle des Radnabenantriebs und zum Austausch von Verschleißteilen geöffnet werden.

In einer weiteren besonders bevorzugten Ausführungsform der vorliegenden Erfindung ist ein Temperatursensor zur Überwachung der Betriebstemperatur des Elektromotors vorgesehen. Dies erlaubt es, den Elektromotor kontrolliert bis an die thermische Grenze hin zu belasten und bei Bedarf auch kurzzeitig im Überlastbereich zu betreiben. Damit kann kurzzeitig ein großes Drehmoment bzw. eine hohe Leistung bereitgestellt werden, ohne dass es zu dauerhaften Schäden des Radnabenantriebs bzw. des Elektromotors kommt.

Der erfindungsgemäße Radnabenantrieb eignet sich insbesondere als Unterstützungsantrieb eines weiteren Antriebs, insbesondere für ein Hybridfahrzeug oder einen Pedelec. Auch kann der erfindungsgemäße Radnabenantrieb als Hinterradantrieb eines Fahrrads zum Einsatz kommen. Weitere Einsatzmöglichkeiten sind ebenfalls denkbar.

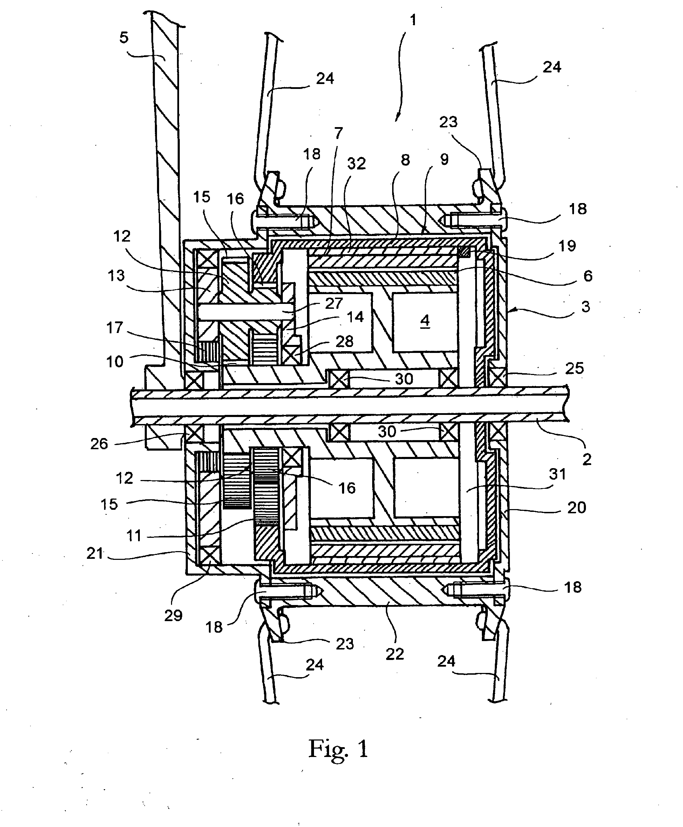

Im Folgenden wird ein Ausführungsbeispiel der vorliegenden Erfindung anhand einer Zeichnung näher erläutert. Die Figur zeigt einen Längsschnitt durch einen erfindungsgemäßen elektrischen Radnabenantrieb 1. Im vorliegenden Ausführungsbeispiel dient der Radnabenantrieb 1 als Hilfsantrieb eines Fahrrads. Der erfindungsgemäße Radnabenantrieb besteht im Wesentlichen aus einem drehbar gelagerten Nabengehäuse 3, einem bürstenlosen Elektromotor zum Antrieb des Nabengehäuses, und einem zwischen Elektromotor und Nabengehäuse geschalteten Planetengetriebe.

Das drehbar gelagerte Radnabengehäuse 3 ist aus Aluminium gefertigt und besteht aus drei Teilen, nämlich einem hohlzylindrischen Nabengehäusemittelteil 22, einem linken Nabengehäusedeckel 21 und einem rechten Nabengehäusedeckel 20. Rechter und linker Nabengehäusedeckel 20 bzw. 21 sind mittels mehrerer Schrauben 18 mit dem Nabengehäusemittelteil 22 verschraubt. Die mehrteilige Ausführung des Nabengehäuses 3 ermöglicht ein einfaches Zerlegen des erfindungsgemäßen Radnabenantriebs zu Service- bzw. Wartungs- oder Reparaturzwecken. Der Nabengehäusemittelteil 22 umfasst in üblicher Weise zwei Nabenflanken 23, an welchen die Speichen 24 des Hinterrads angebracht sind. Die drehbare Lagerung des Nabengehäuses 3 erfolgt über zwei Kugellager, nämlich dem rechten Kugellager 25 zwischen dem rechten Nabengehäusedeckel 20 und der feststehenden Achse 2 und dem linken Lager 26 zwischen dem linken Nabengehäusedeckel 21 und ebenfalls der feststehenden Achse 2. Bei der Achse 2 handelt es sich um eine gewöhnliche, hohlzylindrisch ausgebildete Hinterradachse, die mit der hinteren Gabel 5 des Fahrrads verbunden ist, von der nur der linke Ast gezeigt ist. Auch Schnellspanner bzw. Befestigungsmittel zum Festlegen der Achse 2 an der Hinterradgabel 5 sind nicht gezeigt. Auf derselben Achse befinden sich zwischen Radnabenantrieb und rechtem Gabelast noch das Antriebsritzel für den Kettenantrieb und bei Bedarf eine Bremsscheibe.

Das Nabengehäuse 3 umschließt den Elektromotor und das Planetengetriebe vollständig. Der Elektromotor ist in der Abbildung im rechten Bereich dargestellt, das Planetengetriebe befindet sich axial daran anschließend im linken Bereich der Abbildung. Nabengehäuse 3, Elektromotor und Planetengetriebe sind konzentrisch zur Achse 2 angeordnet.

Der Elektromotor umfasst ein Motorgehäuse 8, das drehfest mit der feststehenden Achse 2 verbunden ist. Das hohlzylindrisch ausgeführte Gehäuse 8 umhüllt die ebenfalls hohlzylindrisch ausgeführte Statorwicklung 7, die als eisenlose Statorwicklung ausgeführt ist. Zwischen Statorwicklung und Motorgehäuse ist ein Rückschluss 32 angeordnet, der aus mehreren ringscheibenförmigen Blechen aus weichmagnetischem Stahl zusammengesetzt ist. Der Rückschluss 32 liegt radial direkt sowohl am Motorgehäuse 8 als auch an der Statorwicklung 7 an, wodurch die in der Statorwicklung entstehende Abwärme beim Betrieb des Elektromotors sehr schnell über das Motorgehäuse 8 nach außen abgeführt werden kann. Eine weitere Maßnahme zur Verbesserung des Wärmetransports ist weiter unten beschrieben. Da die Statorwicklung ansonsten eisenlos ausgeführt ist, treten bei dem erfindungsgemäßen Radnabenantrieb sehr geringe Eisenverluste auf. Die Statorwicklung ist mehrpolig ausgeführt und umfasst in Umfangsrichtung mehrere sich gegenseitig überlagernde Wicklungen, die von einer nicht dargestellten Elektronik abwechselnd reihum mit Strom beaufschlagt werden. Die sich überlagernden Wicklungen der Statorwicklung 7 sind mit Epoxydharz miteinander verleimt. Die nicht dargestellte Elektronik zur Beaufschlagung der Statorwicklung kann entweder außerhalb des Elektromotors oder innerhalb des Elektromotors, beispielsweise in dem Hohlraum 31 im rechten Bereich innerhalb des Motorgehäuses 8 untergebracht sein. Die elektrischen Anschlüsse sind durch nicht dargestellte Öffnungen in der feststehenden Achse 2 durch die Achse hindurch nach außen geführt.

Der Rotor 4 des Elektromotors ist als Innenläufer ausgelegt und somit von der feststehenden Statorwicklung 7 umschlossen. Der Rotor ist mittels der beiden Kugellager 30 drehbar gegenüber der feststehenden Achse 2 gelagert. Am äußeren Umfang des Rotors 4 sind mehrere Permanentmagnete 6 angebracht, die gleichmäßig über den Umfang verteilt und abwechselnd gegenseitig gepolt sind. Zwischen den Permanentmagneten 6 und der feststehenden Statorwicklung 7 besteht ein geringer Luftspalt, der notwendig ist, damit sich der Rotor 4 drehen kann. Das Motorgehäuse 8 ist nach links hin offen. Aus ihm tritt ein kleiner Wellenstummel des Rotors 4 hervor, dessen linkes Ende das Sonnenrad 10 des einstufigen Planetengetriebes bildet. Der Wellenstummel bzw. das Sonnenrad kann, wie dargestellt, einstückig mit dem Rotor 4 ausgeführt oder drehfest mit dem Rotor verbunden sein.

Das Sonnenrad 10 kämmt mit insgesamt drei Planetenrädern 12, von welchen das obere geschnitten dargestellt ist. Die drei Planetenräder sind gleichmäßig über den Umfang des Planetengetriebes verteilt. Die Planetenräder sind abgestuft ausgeführt und umfassen jeweils einen ersten Zahnkranz 15 mit größerem Durchmesser und einen zweiten Zahnkranz 16 mit einem kleineren Durchmesser. Der erste Zahnkranz 15 mit dem größeren Durchmesser steht mit dem Sonnenrad 10 der Rotorwelle in Eingriff, der zweite Zahnkranz 16 mit kleinerem Durchmesser kämmt mit einem Hohlrad 11, welches Teil des Motorgehäuses 8 ist. Um eine kompakte Bauweise zu erreichen, befindet sich der zweite Zahnkranz mit geringerem Durchmesser näher am Elektromotor, d.h. in der Darstellung weiter rechts, als der erste Zahnkranz 15 mit dem größeren Durchmesser. Alle Planetenräder sind jeweils über eine Planetenachse 27 drehbar in einem Planetenträger gelagert, der durch die beiden Planetenträgerscheiben 13 und 14 gebildet ist. Die Planetenräder 12 sind durch die beiden Planetenträgerscheiben 13 und 14 beidseitig abgestützt, wodurch die Reibung im Planetengetriebe verringert werden kann. Die erste Planetenträgerscheibe 13 befindet sich in der Darstellung links zwischen den Planetenrädern 12 und dem linken Nabengehäusedeckel 21. Sie ist über ein äußeres Kugellager 29 gegenüber dem Nabengehäuse drehbar gelagert. Die rechte Planetenträgerscheibe 14 zwischen dem Rotor 4 des Elektromotors und den Planetenrädern 12 ist ebenfalls drehbar gelagert, und zwar mittels eines Lagers 28, das zwischen der innenliegenden Rotorwelle und der die Rotorwelle umschließenden Planetenträgerscheibe 14 angeordnet ist. Der Planetenträger ist daher prinzipiell frei drehbar, und zwar sowohl gegenüber Stator und Rotor des Elektromotors als auch gegenüber dem Nabengehäuse 3. Dennoch bildet der Planetenträger den Abtrieb des Planetengetriebes. Die linke Planetenträgerscheibe 13 ist hierzu mittels einer Freilaufkupplung 17 mit dem linken Nabengehäusedeckel 21 gekoppelt. Die Freilaufkupplung 17 sorgt dafür, dass der Planetenträger lediglich in einer Drehrichtung mit dem Nabengehäuse in Eingriff steht. In der gegenläufigen Drehrichtung ist das Nabengehäuse frei gegenüber dem Planetenträger drehbar.

Zur Verbesserung des Wärmetransports der im Stator entstehenden Abwärme des Elektromotors befindet sich in dem Spalt 9 zwischen dem Motorgehäuse 8 und dem umschließenden Nabengehäuse 3 ein wärmeleitendes Fluid. Die in der Statorwicklung 7 entstehende Wärme kann daher optimal über den Rückschluss 32, das Motorgehäuse 8, das wärmeleitende Fluid und das Nabengehäuse 3 nach außen abgeführt werden. Zudem umfasst der Elektromotor einen Temperatursensor 19, der unmittelbar an der Statorwicklung 7 positioniert ist. Der Temperatursensor 19 ist an die nicht dargestellte Elektronik des Elektromotors angeschlossen. Der Elektromotor kann daher kontrolliert bei der maximalen Betriebstemperatur betrieben werden. Ferner ist durch die ständige Überwachung der Temperatur bei Bedarf auch ein kurzzeitiger Betrieb des Elektromotors im Überlastbereich möglich. Der erfindungsgemäße Radnabenantrieb kann daher kurzzeitig ein sehr großes Drehmoment bzw. eine sehr hohe Leistung zur Verfügung stellen, ohne dass der Elektromotor dabei Schaden nimmt.

## Patentansprüche

1. Elektrischer Radnabenantrieb (1) für ein Fahrzeug, insbesondere ein Fahrrad, mit einem drehbar um eine Achse (2) gelagerten Nabengehäuse (3), einem koaxial zur Achse (2) angeordneten bürstenlosen Elektromotor mit einem Rotor (4) und einem Stator zum Antrieb des Nabengehäuses (3), wobei der Stator mit einer hohlzylindrisch ausgebildeten Statorwicklung (7) ausgeführt ist, und wobei der Rotor (4) zumindest einen Permanentmagnet (6) umfasst und radial innerhalb der Statorwicklung (7) als Innenläufer angeordnet ist, **dadurch gekennzeichnet, dass** die Statorwicklung (7) als eisenlose Statorwicklung und mehrpolig ausgeführt ist und in Umfangsrichtung mehrere sich gegenseitig überlagernde Wicklungen umfasst, die abwechselnd reihum mit Strom beaufschlagt werden.

2. Elektrischer Radnabenantrieb (1) nach Anspruch 1, **dadurch gekennzeichnet, dass** ein zwischen Elektromotor und Nabengehäuse (3) geschaltetes Planetengetriebe vorgesehen ist, das antriebseitig mit dem Rotor (4) und abtriebseitig mit dem Nabengehäuse (3) gekoppelt ist.

3. Elektrischer Radnabenantrieb (1) nach Anspruch 1 oder 2, **dadurch gekennzeichnet, dass** die Statorwicklung (7) von einem Motorgehäuse (8) des Elektromotors umschlossen und wärmeleitend mit diesem verbunden ist.

4. Elektrischer Radnabenantrieb (1) nach Anspruch 3, **dadurch gekennzeichnet, dass** zwischen Statorwicklung (7) und Motorgehäuse (8) ein weichmagnetischer Rückschluss (32) angeordnet ist.

5. Elektrischer Radnabenantrieb (1) nach einem der Ansprüche 2 bis 4, **dadurch gekennzeichnet, dass** das Nabengehäuse (3) den Elektromotor und das Planetengetriebe zumindest teilweise umschließt.

6. Elektrischer Radnabenantrieb (1) nach Anspruch 5, **dadurch gekennzeichnet, dass** in einem Spalt (9) zwischen Motorgehäuse (8) und Nabengehäuse (3) ein wärmeleitendes Fluid vorgesehen ist, wobei sowohl Nabengehäuse (3) als auch Motorgehäuse (8) zumindest im Bereich des Spalts (9) aus einem Material mit hoher Wärmeleitfähigkeit, insbesondere aus Stahl oder Aluminium, bestehen.

7. Elektrischer Radnabenantrieb (1) nach einem der Ansprüche 2 bis 6, **dadurch gekennzeichnet, dass** das Planetengetriebe einstufig ausgeführt ist, wobei die eine Stufe ein drehfest mit dem Rotor (4) verbundenes oder einstückig mit einer Rotorwelle des Rotors (4) ausgeführtes Sonnenrad (10), ein drehfest mit dem Stator verbundenes Hohlrad (11), zumindest ein mit dem Sonnenrad (10) und dem Hohlrad (11) kämmendes Planetenrad (12), sowie einen Planetenträger (13, 14) zur Abstützung des zumindest einen Planetenrads (12) umfasst, wobei der Planetenträger (13) den mit dem Nabengehäuse (3) gekoppelten Abtrieb des Planetengetriebes bildet.

8. Elektrischer Radnabenantrieb (1) nach Anspruch 7, **dadurch gekennzeichnet, dass** das Hohlrad (11) durch das Motorgehäuse (8) gebildet wird.

9. Elektrischer Radnabenantrieb (1) nach Anspruch 7 oder 8, **dadurch gekennzeichnet, dass** das Planetenrad (12) an seinen beiden gegenüberliegenden Stirnseiten radial im Planetenträger (13, 14) abgestützt ist.

10. Elektrischer Radnabenantrieb (1) nach einem der Ansprüche 7 bis 9, **dadurch gekennzeichnet, dass** das Planetenrad (12) abgestuft ist und einen ersten Zahnkranz (15) sowie einen zweiten Zahnkranz (16) umfasst, wobei der Durchmesser des ersten Zahnkranzes (15) größer ist als der Durchmesser des zweiten Zahnkranzes (16), und wobei der erste Zahnkranz (15) mit dem Sonnenrad (10), und der zweite Zahnkranz (16) mit dem Hohlrad (11) kämmt.

11. Elektrischer Radnabenantrieb (1) nach Anspruch 10, **dadurch gekennzeichnet, dass** der zweite Zahnkranz (16) in axialer Richtung näher am Rotor (4) des Elektromotors liegt als der erste Zahnkranz (15).

12. Elektrischer Radnabenantrieb (1) nach einem der Ansprüche 2 bis 11, **dadurch gekennzeichnet, dass** der Abtrieb des Planetengetriebes über eine Freilaufkupplung (17) mit dem Nabengehäuse (3) gekoppelt ist.

13. Elektrischer Radnabenantrieb (1) nach einem der Ansprüche 1 bis 12, **dadurch gekennzeichnet, dass** das Nabengehäuse (3) mehrteilig und mittels lösbarer Befestigungsmittel, insbesondere Schrauben (18), zusammengehalten ist.

14. Elektrischer Radnabenantrieb (1) nach einem der Ansprüche 1 bis 13, **dadurch gekennzeichnet, dass** ein Temperatursensor (19) zur Überwachung der Betriebstemperatur des Elektromotors vorgesehen ist.

## Claims

1. An electric wheel hub drive (1) for a vehicle, in particular a bicycle, comprising a hub housing (3) pivot-mounted about an axis (2), a brushless electric motor coaxially arranged to said axis (2) and including a rotor (4) and a stator for driving the hub housing (3), wherein the stator is designed with a hollow-cylindrical stator winding (7), and wherein the rotor (4) includes at least one permanent magnet (6) and is arranged as an internal rotor radially within the stator winding (7), **characterized in that** the stator winding (7) is designed as iron less stator winding and has multiple poles and circumferentially includes a plurality of windings overlapping each other and being alternately supplied with power.

2. The electric wheel hub drive (1) according to claim 1, **characterized in that** a planetary gear system is provided interposed between the electric motor and the hub housing (3) and coupled, at the driving end, to the rotor (4) and, at the output end, to the hub housing (3).

3. The electric wheel hub drive (1) according to either claim 1 or 2, **characterized in that** the stator winding (7) is enclosed by a motor housing (8) of the electric motor and connected thereto in a thermo-conductive manner.

4. The electric wheel hub drive (1) according to claim 3, **characterized in that** a magnetically soft yoke (32) is arranged between the stator winding (7) and the motor housing (8).

5. The electric wheel hub drive (1) according to one of claims 2 to 4, **characterized in that** the electric motor and the planetary gear system are at least partially enclosed by the hub housing (3).

6. The electric wheel hub drive (1) according to claim 5, **characterized in that** a thermo-conductive fluid is provided in a gap (9) between the motor housing (8) and the hub housing (3), wherein both the hub housing (3) and the motor housing (8) consist of a material, at least in the region of the gap (9), of high thermal conductivity, in particular of steel or aluminum.

7. The electric wheel hub drive (1) according to any of claims 2 to 6, **characterized in that** the planetary gear system is single-staged, wherein said one stage includes a sun gear (10) non-rotatably mounted to the rotor (4) or integrally formed with a rotor shaft of the rotor (4), a ring gear (11) non-rotatably mounted to the stator, at least one planet gear (12) meshing with the sun gear (10) and the ring gear (11), and a planet carrier (13, 14) for carrying the at least one planet gear (12), wherein the planet carrier (13) constitutes the output of the planetary gear system that is coupled to the hub housing (3).

8. The electric wheel hub drive (1) according to claim 7, **characterized in that** the ring gear (11) is formed by the motor housing (8).

9. The electric wheel hub drive (1) according to either claim 7 or 8, **characterized in that** the planet gear (12) is radially supported at both of its opposing front sides in the planet carrier (13, 14).

10. The electric wheel hub drive (1) according to any of claims 7 to 9, **characterized in that** the planet gear (12) is stepped and includes a first gear rim (15) and a second gear rim (16), wherein the diameter of the first gear rim (15) is larger than the diameter of the second gear rim (16), and wherein the first gear rim (15) meshes with the sun gear (10) and the second gear rim (16) meshes with the ring gear (11).

11. The electric wheel hub drive (1) according to claim 10, **characterized in that** the second gear rim (16) is axially closer to the rotor (4) of the electric motor than the first gear rim (15).

12. The electric wheel hub drive (1) according to any of claims 2 to 11, **characterized in that** the output of the planetary gear system is coupled to the hub housing (3) via a freewheel clutch (17).

13. The electric wheel hub drive (1) according to any of claims 1 to 12, **characterized in that** the hub housing (3) consists of several parts and is held together by means of detachable fastening elements, in particular screws (18).

14. The electric wheel hub drive (1) according to any of claims 1 to 13, **characterized in that** a temperature sensor (19) is provided for monitoring the operating

## Revendications

1. Entraînement électrique de moyeu de roue (1) pour un véhicule, notamment un vélo, comprenant un carter de moyeu (3) monté rotatif autour d'un axe (2), un moteur électrique sans balais agencé coaxialement à l'axe (2) et comportant un rotor (4) et un stator pour l'entraînement du carter de moyeu (3), le stator étant réalisé avec un enroulement de stator (7) de configuration cylindrique creuse, et le rotor (4) comprenant au moins un aimant permanent (6) et étant agencé radialement à l'intérieur de l'enroulement de stator (7) en tant qu'induit intérieur,
**caractérisé en ce que** l'enroulement de stator (7) est réalisé sous forme d'enroulement de stator non ferreux et est multipolaire, et comprend en direction périphérique plusieurs enroulements se chevauchant mutuellement dans cette direction, qui sont alimentés en courant de manière alternée, à tour de rôle.

2. Entraînement électrique de moyeu de roue (1) selon la revendication 1, **caractérisé en ce qu'**il est prévu un train épicycloïdal monté entre le moteur électrique et le carter de moyeu (3), et qui est couplé, du côté entrée d'entraînement au rotor (4), et du côté sortie d'entraînement, au carter de moyeu (3).

3. Entraînement électrique de moyeu de roue (1) selon la revendication 1 ou la revendication 2, **caractérisé en ce que** l'enroulement de stator (7) est entouré par un carter de moteur (8) du moteur électrique, et est relié à celui-ci par une liaison assurant une bonne conduction de la chaleur.

4. Entraînement électrique de moyeu de roue (1) selon la revendication 3, **caractérisé en ce qu'**entre l'enroulement de stator (7) et le carter de moteur (8) est agencé un retour magnétique doux (32).

5. Entraînement électrique de moyeu de roue (1) selon l'une des revendications 2 à 4, **caractérisé en ce que** le carter de moyeu (3) entoure au moins partiellement le moteur électrique et le train épicycloïdal.

6. Entraînement électrique de moyeu de roue (1) selon la revendication 5, **caractérisé en ce que** dans un interstice (9) entre le carter de moteur (8) et le carter de moyeu (3), il est prévu un fluide caloporteur, aussi bien le carter de moyeu (3) que le carter de moteur (8) étant réalisés, au moins dans la zone de l'interstice (9), en un matériau de conductibilité thermique élevée, notamment en acier ou en aluminium.

7. Entraînement électrique de moyeu de roue (1) selon l'une des revendications 2 à 6, **caractérisé en ce que** le train épicycloidal est d'une configuration à un étage, ledit un étage comprenant une roue centrale (10) liée de manière fixe en rotation au rotor (4) ou réalisée d'un seul tenant avec l'arbre de rotor du rotor (4), une couronne (11) liée de manière fixe en rotation au stator, au moins un satellite (12) engrenant avec la roue centrale (10) et la couronne (11), ainsi qu'un porte-satellite (13, 14) supportant ledit au moins un satellite (12), le porte-satellite (13) formant la sortie d'entraînement du train épicycloïdal, qui est couplée au carter de moyeu (3).

8. Entraînement électrique de moyeu de roue (1) selon la revendication 7, **caractérisé en ce que** la couronne (11) est formée par le carter de moteur (8).

9. Entraînement électrique de moyeu de roue (1) selon la revendication 7 ou la revendication 8, **caractérisé en ce que** le satellite (12) est supporté radialement sur ses deux côtés frontaux opposés, dans le porte-satellite (13, 14).

10. Entraînement électrique de moyeu de roue (1) selon l'une des revendications 7 à 9, **caractérisé en ce que** le satellite (12) est étagé et comporte un premier anneau denté (15) ainsi qu'un deuxième anneau denté (16), le diamètre du premier anneau denté (15) étant supérieur au diamètre du deuxième anneau denté (16), et le premier anneau denté (15) engrenant avec la roue centrale (10), et le deuxième anneau denté (16) avec la couronne (11).

11. Entraînement électrique de moyeu de roue (1) selon la revendication 10, **caractérisé en ce que** le deuxième anneau denté (16) se situe, en se référant à la direction axiale, plus près du rotor (4) du moteur électrique, que le premier anneau denté (15).

12. Entraînement électrique de moyeu de roue (1) selon l'une des revendications 2 à 11, **caractérisé en ce que** la sortie d'entraînement du train épicycloïdal est couplée au carter de moyeu (3) par l'intermédiaire d'un accouplement à roue libre (17).

13. Entraînement électrique de moyeu de roue (1) selon l'une des revendications 1 à 12, **caractérisé en ce que** le carter de moyeu (3) est en plusieurs parties et est maintenu assemblé à l'aide de moyens de fixation démontables, notamment des vis (18).

14. Entraînement électrique de moyeu de roue (1) selon l'une des revendications 1 à 13, **caractérisé en ce qu'**il est prévu une sonde de température (19) pour surveiller la température de fonctionnement du moteur électrique.
